# EUROPEAN PATENT APPLICATION

(11) **EP 3 750 927 A1**
(43) Date of publication of application: **16.12.2020**
(21) Application number: 19179633.3
(22) Date of filing: 12.06.2019
(51) Int. Cl.: C08F 210/06, C08F 4/659

(54) **HETEROPHASIC PROPYLENE COPOLYMER WITH IMPROVED MECHANICAL PROPERTIES**

(71) Applicant: Borealis AG, 1220 Vienna (AT)
(72) Inventor: GAHLEITNER, Markus, 4021 Linz (AT); WANG, Jingbo, 4021 Linz (AT); HOFF, Matthias, 4021 Linz (AT); BERNREITNER, Klaus, 4021 Linz (AT); TOELTSCH, Wilfried, 4021 Linz (AT)
(74) Representative: Borealis AG

(57) **Abstract**

The present invention relates to a random heterophasic propylene copolymer with good optical and impact properties, a process for preparing such a random heterophasic propylene copolymer and articles made therefrom.

## Description

The present invention relates to a random heterophasic propylene copolymer with good optical and impact properties, a process for preparing such a random heterophasic propylene copolymer and articles made therefrom.

### Background Information

Polyolefins are widely used in different areas due to their low cost and diversified performance. One of the main properties required by polyolefins used in the packaging or health care applications are good mechanical properties, like softness and flexibility, combined with good impact and good optical behaviour, especially low transparency or haze.

An area of special interest are soft bottles, films and tubes for medical applications requiring rather low modulus, like 300 MPa or below and good optical properties in the sense of low haze.

Especially heterophasic propylene copolymers can be modified to rubber like materials with low moduli, which are the suitable for soft or soft-touch products like soft films or flexible tubes. Currently, the main source for commercially available soft polypropylene based products are based on the Catalloy ™ process of Lyondell Basell, in which heterophasic propylene copolymers are produced in the presence of a specific Ziegler Natta catalyst in a sequence of up to four sequential gas phase reactors to maximize the rubber production. These resins are commercially available from Lyondell-Basell under the tradename "Adflex". However, due to limitations of the polymerization process, the properties of these resins are to a certain extent limited, especially in regard to their haziness, low transparency and high amounts for extractable fractions.

### Description of the prior art:

EP 2018152238 discloses extremely soft polypropylene compositions based on single-site catalysts. Claimed is a heterophasic polypropylene composition comprising a polymer base resin which comprises a matrix phase and an elastomeric phase dispersed therein, wherein the matrix phase and the elastomeric phase are polymerized in the presence of a single-site catalyst; and wherein the polymer base resin comprises (A) from 20 to 55 wt.-% of a crystalline fraction (CF), measured by Crystex QC in trichlorobenzene, which is a propylene homopolymer fraction or a copolymer fraction of propylene monomer units and comonomer units of ethylene or alpha-olefins with 4 to 12 carbon atoms with an amount of comonomer units of up to 6.0 wt.-%; and (B) from 45 to 80 wt.-% of a soluble fraction (SF), measured by Crystex QC in trichlorobenzene, which is a copolymer of propylene monomer units and comonomer units of ethylene or alpha-olefins with 4-12 carbon atoms, with an amount of comonomer units of from 17 to 55 wt.-% and an intrinsic viscosity iV of from 1.2 to 7.0 dl/g, wherein the heterophasic polypropylene composition has a tensile modulus of not more than 700 MPa.

The examples disclosed have an ethylene content in the crystalline fraction (CF) of 1.1 wt.-% or below and an ethylene content in the soluble fraction (SF) of 24.0 - 49.9 wt.-%.

The application is concerned neither with high impact strength nor with optical properties.

EP 2017208983 discloses a heterophasic polypropylene composition comprising (a) a crystalline matrix being a multimodal propylene random copolymer of ethylene and/or C4-C12 alpha-olefin(s) as further comonomers and (b) an amorphous propylene-ethylene elastomer optionally comprising minor amounts of C4-C12 alpha -olefin(s) as further comonomers dispersed in said crystalline matrix (a), wherein the heterophasic polypropylene composition is characterised by (i) a xylene cold solubles (XCS) fraction according to ISO 1652 of less than 16.5 wt.-%, (ii) a comonomer content of the XCS fraction (Co(XCS)) in the range of 8.0 to 16.5 wt.-%, and optionally fulfilling the inequation 0.80 ≤ XCS / Co(XCS) ≤ 1.20.

The application discloses a lower elastomer content, i.e. a lower amount of soluble fraction, than the compositions of the present invention.

WO 2015/139875 A1 discloses a random heterophasic propylene copolymer (RAHECO) comprising (i) a matrix (M) being a propylene copolymer (R-PP) and (ii) an elastomeric propylene copolymer (EC) dispersed in said matrix (M), said heterophasic propylene copolymer (RAHECO) having (a) a comonomer content in the range of 1.5 to 14.0 mol-%; (b) a melting temperature determined by differential scanning calorimetry (DSC) in the range of 140 to 155 °C; (c) a xylene cold soluble (XCS) fraction determined according to ISO 16152 (25 °C) in the range of 10.0 to equal or below 30.0 wt.-%, wherein further the propylene copolymer (RAHECO) fulfills (d) the inequation C2(XCS)/C2(total) > 2.1 and (e) the in-equation (II) Tm ≥ 153.5 - 1.8 C2(XCI) (II).

The XCS fraction and the C2(XCS) are outside the range of the present invention. Furthermore, the values reported for impact strength are below 30 kJ/m².

WO 2013/092620 A1 discloses a propylene copolymer having a melt flow rate MFR2 (230 °C) in the range of 2.5 to 12.0g/10min, a xylene cold soluble content (XCS) in the range of 20.0 to 45.0 wt.-%, a total comonomer content in the range of more than 7.5 to 12.0 wt.-%, wherein further the comonomer content of xylene cold soluble (XCS) fraction of the propylene copolymer is in the range of 16.0 to 28.0 wt.-%. The values reported for optical properties are rather poor, with haze values given above 30 %.

Thus there is a need in the art for random heterophasic propylene resins with a high flexibility (i.e. a low flexural and/or tensile modulus), which also show good impact behaviour while providing low haze.

### Object of the invention

Based on this need it was object of the present invention to provide a random heterophasic propylene copolymer with very specifically selected amounts of crystalline and soluble fractions with well defined comonomer contents in each of the crystalline and soluble fractions, provides said particular profile of mechanical properties, namely combining high flexibility (i.e. a low flexural and/or tensile modulus) with good impact behaviour while providing low haze.

### Summary of the invention

Accordingly the present invention relates to a random heterophasic propylene copolymer comprising
a) 45.0 to 73.0 wt.-% of a crystalline matrix being a propylene random copolymer of ethylene and/or C4-C12 alpha-olefin(s) as further comonomer(s),
   said crystalline matrix corresponding to the crystalline fraction (CF) determined according to CRYSTEX QC method, ISO 6427-B and containing 3.0 to 8.0 wt.-% of comonomer and
b) 27.0 to 55.0 wt.-% of an amorphous propylene elastomer comprising ethylene and/or C4-C12 alpha-olefin(s),
   said the amorphous elastomer corresponds to the soluble fraction (SF) determined according to CRYSTEX QC method, ISO 6427-B and contains 12.0 to 16.5 wt.-% of comonomer, wherein a) and b) add up to 100 wt.-%, and wherein
   i) the random heterophasic propylene copolymer has a total comonomer content of 3.0 to 12.0 wt.-% and optionally
   ii) a Haze₁ determined according to ASTM D1003 at 1 mm plaques of 5.0 to 25.0 %.

In one embodiment the invention relates to a process for preparing the random heterophasic propylene copolymer as defined herein comprising the steps of
a) polymerizing propylene and optionally comonomer units selected from ethylene or alpha-olefins with 4 to 12 carbon atoms in a first polymerization reactor in the presence of a single-site catalyst to produce a first polymerization mixture comprising a first propylene copolymer, preferably being an propylene random copolymer and the single-site catalyst;
b) transferring the first polymerization mixture into a second polymerization reactor;
c) polymerizing propylene and comonomer units selected from ethylene or alphaolefins with 4 to 12 carbon atoms in said second polymerization reactor in the presence of said single-site catalyst to produce a second polymerization mixture comprising a second propylene copolymer, said first propylene homo- or copolymer and the single-site catalyst, wherein the weight ratio of said first propylene homo- or copolymer to said second propylene copolymer is in the range of 35:65 to 55:45;
d) withdrawing said second polymerization mixture from said second polymerization reactor; and
e) compounding said second polymerization mixture optionally with the addition of additives to form the random heterophasic propylene copolymer.

Further, the present invention relates to an article comprising the random heterophasic propylene copolymer as defined above or below.

Still further, the present invention relates to the use of the random heterophasic propylene copolymer as defined above or below for the production of an article.

### Definitions

A heterophasic polypropylene is a propylene-based copolymer with a crystalline matrix phase, which can be a propylene homopolymer or a random copolymer of propylene and at least one alpha-olefin comonomer, and an elastomeric phase dispersed therein. In case of a random heterophasic propylene copolymer, said crystalline matrix phase is a random copolymer of propylene and at least one alpha-olefin comonomer.

The polymers according to the present invention may have a co-continuous morphology (CCM), in which both crystalline matrix and elastomeric phase are continuous when considered on a three-dimensional level. Such co-continuous morphology (CCM) is frequently found in multiphase like two-phase polymer compositions like polymer blends at approximately equal volume fractions and are described for example by Willemse et al, Polymer 40 (1999) 827-834 and Carolan et al, Computational Material Science 98 (2015) 24-33. In case of good compatibility of the two phases, the CCM is known to exist in wider ranges of composition.

The elastomeric phase can be a propylene copolymer with a high amount of comonomer which is not randomly distributed in the polymer chain but is distributed in a comonomer-rich block structure and a propylene-rich block structure. A (random) heterophasic polypropylene usually differentiates from a one-phasic propylene copolymer in that it shows two distinct glass transition temperatures Tg which are attributed to the matrix phase and the elastomeric phase. A propylene homopolymer is a polymer which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units. A propylene random copolymer is a copolymer of propylene monomer units and comonomer units, preferably selected from ethylene and C4-C12 alpha-olefins, in which the comonomer units are distributed randomly over the polymeric chain. The propylene random copolymer can comprise comonomer units from one or more comonomers different in their amounts of carbon atoms. A polymer base resin is meant as the entirety of all polymeric components present in the random heterophasic propylene copolymer as defined above or below. The polymer base resin can consist only of the matrix phase and the elastomeric phase. However, the polymer base resin can comprise further polymeric components other than the matrix phase and the elastomeric phase. The polymer base resin is preferably a polypropylene base resin, which means that the majority of the weight amount of the polymer base resin results from propylene homo- or copolymers. In the following amounts are given in % by weight (wt.-%) unless it is stated otherwise.

### Detailed description:

### Random heterophasic propylene copolymer

The random heterophasic propylene copolymer according to the present invention comprises a polymer base resin which comprises a matrix phase and an elastomeric phase dispersed therein. Besides the polymer base resin the random heterophasic propylene copolymer can comprise one or more additives in an amount of from 0.0 up to 5.0 wt.-%, based on the total amount of the random heterophasic propylene copolymer. The one or more additives are preferably selected from slip agents, anti-block agents, UV stabilizers, acid scavengers, antioxidants, alpha- and/or beta nucleating agents, antistatic agents, pigments, etc. Such additives are commonly known to a person skilled in the art. Usually, these additives are added in quantities of 100 to 2000 ppm for each single component. The one or more additives can be added to the polymer base resin in a blending step after polymerization of the matrix phase and the elastomeric phase. Thereby, the one or more additives can be added to the polymer base resin in form of master batches in which one or more additives are blended with a carrier polymer in concentrated amounts. Any optional carrier polymer is calculated to the amount of additives, based on the total amount of the random heterophasic propylene copolymer.

It is envisaged in the present invention that any such additives carrier polymer may be present in the range of 0.1 to 5.0 wt.-%, preferably in the range of 0.3 to 3.0 wt.-%, more preferably in the range of 0.5 to 2.5 wt.-%, even in case, the composition is defined in a closed way using "consisting of" wording.

The melt flow rate MFR230/2.16 of the random heterophasic propylene copolymer may be in the range of 0.1 to 50.0 g/10min; preferably in the range of 0.5 to 35.0 g/10min; more preferably in the range of 1.0 to 20.0 g/10min. MFR230/2.16 is measure according to ISO1133 at 230 °C and a load of 2.16 kg.

The storage modulus G' of the inventive polymer may be in the range of 50 to 325 MPa; preferably in the range of 60 to 300 MPa; more preferably in the range of 70 to 270 MPa.

The random heterophasic propylene copolymer may have at least two distinct glass transition temperatures, Tg1 and Tg2.

The upper glass transition temperature Tg1 of the inventive polymer related to the crystalline matrix phase may be in the range of (-10.0) to 0.0 °C; preferably in the range of (-8.0) to (-1.0) °C; more preferably in the range of (-7.0) to (-1.5) °C.

The lower glass transition temperature Tg2 of the inventive polymer related to the elastomeric phase may be in the range of (-30.0) to (-15) °C; preferably in the range of (-29.0) to (-18.0) °C; more preferably in the range of (-29.0) to (-19.0) °C.

Storage modulus and glass transition temperatures are conveniently determined by dynamic mechanical thermal analysis (DMTA) according to ISO 6721-7.

The upper melting temperature Tm1 of the inventive polymer related to the crystalline matrix phase may be in the range of 120 to 155 °C; preferably in the range of 125 to 150 °C. The inventive polymer may further exhibit a lower melting temperature Tm2 related to crystalline ethylene copolymer present in a very minor amount and being below 100 °C; preferably in the range of 50 to 75 °C. Both melting temperatures are conveniently determined by differential scanning calorimetry (DSC) analysis according to ISO 11357.

The random heterophasic propylene copolymer may be characterized by a Molecular Weight Distribution (MWD), being the ratio of Mw/Mn, of in the range of 1.5 to 4.2, preferably 2.0 to 4.1, like 2.5 to 3.9. The MWD may conveniently be determined by size exclusion chromatography (SEC).

The random heterophasic propylene copolymer of the present invention has a very high impact strength. The Charpy notched impact strength determined according to ISO 179/1eA at +23 °C (NIS/23°C) of the inventive polymer may be in the range of 30.0 to 120.0 kJ/m²; preferably in the range of 45.0 to 100.0 kJ/m²; more preferably in the range of 60.0 to 90.0 kJ/m².

The random heterophasic propylene copolymer of the present invention is very soft. Accordingly, the flexural modulus according to ISO 178 of the inventive polymer may be in the range of 150 to 500 MPa; preferably in the range of 170 to 450 MPa; more preferably in the range of 180 to 400 MPa.

Likewise, also the Tensile Modulus according to ISO 527 measured on specimen type 5A (small dog bone) of the inventive polymer is low. Tensile modulus may be in the range of 150 - 600 MPa; preferably in the range of 180 to 550 MPa; more preferably in the range of 200 to 500 MPa.

The random heterophasic propylene copolymer of the present invention has very low haze. Haze of the inventive polymer determined according to ASTM D1003 on 1mm thick injection moulded plaques may be in the range of 5.0 to 25.0 %; preferably in the range of 7.0 to 24.0 %; more preferably in the range of 9.0 to 23.0 %. Said Haze determined on 1 mm plaques is denominated as Haze₁.

The Clarity of the inventive polymer, also determined according to ASTM D1003 at 1mm thick injection moulded plaques may be in the range of 90 to 100 %; preferably in the range of 95 to 100 %; more preferably in the range of 98 to 100 %.

The random heterophasic propylene copolymer of the present invention has a specific ratio of Charpy notched impact strength determined according to ISO179/1eA at +23 °C (NIS/23°C) to the Haze of 1 mm thick plaques (NIS/Haze₁) Said ratio (NIS/Haze₁) of the inventive polymer may be in the range of 1.5 to 10.0; preferably in the range of 2.0 to 8.0; more preferably in the range of 2.8 to 6.0.

In a specific embodiment, the random heterophasic propylene copolymer may be characterised by having
a Flexural Modulus according to ISO178 of 150 to 500 MPa, and
a Notched Impact Strength determined according to ISO179/1eA at +23 °C of 30.0 - 120 kJ/m², and
a Haze₁ determined according to ASTM D1003 at 1 mm plaques of 5.0 to 25.0 and optionally a ratio of Notched Impact strength +23 °C to Haze1 (NIS+23/Haze) of 1.50 to 10.0.

### Polymer base resin

The random heterophasic propylene copolymer comprises a matrix phase and an elastomeric phase dispersed therein or forming a co-continuous morphology (CCM) as defined above.

The matrix phase and the elastomeric phase are both polymerized in the presence of a single-site catalyst. The polymer base resin can comprise further polymeric components other than the matrix phase and the elastomeric phase. These additional polymeric components can be introduced into the polymer base resin either by in-situ blending, i.e. by polymerizing the additional polymeric components in one or more polymerization stages of a multi-stage polymerization process in which the different polymeric components are polymerized in the presence of each other or in a post polymerization blending step such as dry-blending or melt-blending. However, in a preferred embodiment the polymer base resin consists of the matrix phase and the elastomeric phase.

The comonomer units of the polymer base resin are preferably selected from ethylene and alpha-olefins with 4 to 12 carbon atoms. Especially preferred are comonomer units selected from ethylene, 1-butene, 1-hexene and 1-octene. Mostly preferred is ethylene. The comonomer units of the polymer base resin can be selected from one or more than one comonomer units selected from ethylene and alpha-olefins with 4 to 12 carbon atoms. Thereby, the elastomeric phase can include the same comonomer units as the matrix phase or can include different comonomer units as the matrix phase. It is preferred that the comonomer units of the base resin are selected from one sort of comonomer units. As a consequence the comonomer units of the matrix phase and the elastomeric phase are the same.

In a preferred embodiment the matrix phase and the elastomeric phase only include, preferably consist of propylene monomer units and ethylene comonomer units.

The total amount of comonomers, preferably being ethylene, in the inventive polymer may be in the range of 3.0 to 14.0 wt.-%; preferably in the range of 4.5 to 12.0 wt.-%; more preferably in the range of 6.0 to 11.0 wt.-%.

In a (random) heterophasic polypropylene copolymer the matrix phase and the elastomeric phase usually can frequently not be separated exactly from each other. In order to characterize the matrix phase and the elastomeric phase of a (random) heterophasic polypropylene copolymer several methods are known. One method is the extraction of a fraction which contains to the most part the elastomeric phase with xylene, thus separating a xylene cold solubles (XCS) fraction from a xylene cold insoluble (XCI) fraction. The XCS fraction contains for the most part the elastomeric phase and only a small part of the matrix phase whereas the XCI fraction contains for the most part the matrix phase and only a small part of the elastomeric phase. The xylene extraction is especially suitable for (random) heterophasic polypropylene copolymers with a highly crystalline matrix phase such as propylene homopolymer matrix phase or propylene random copolymer matrix phase with a low comonomer content of not more than about 3 wt.-%.

For random heterophasic polypropylene copolymers with a propylene random copolymer matrix phase with comonomer contents of more than about 3 wt.-% the amount of matrix phase in the XCS fraction is so high (about 5 wt.-% or higher) that the XCS fraction cannot be suitably used for characterizing the elastomeric phase of the (random) heterophasic polypropylene copolymer as the high amount of matrix phase in the XCS fraction cannot be neglected.

Another method is the separation of a crystalline fraction and a soluble fraction with the CRYSTEX QC method using trichlorobenzene (TCB) as solvent. This method is described below in the measurement methods section. In this method, a crystalline fraction (CF) and a soluble fraction (SF) are separated from each other. The crystalline fraction (CF) contains for the most part the matrix phase and only a small part of the elastomeric phase and the soluble fraction (SF) contains for the most part the elastomeric phase and only a small part of the matrix phase. This method is more suitable for characterizing the crystalline phase and the (amorphous) elastomeric phase of (random) heterophasic polypropylene copolymers with a propylene random copolymer matrix phase with comonomer contents of more than about 3 wt.-%, as by means of the CRYSTEX QC method only a small amount of matrix phase is separated in the soluble fraction (SF). Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The random heterophasic propylene copolymer of the present invention has an amount of fraction soluble in cold xylene (XCS) in the range from about 30.0 to 60 wt.-%, like 35.0 - 55.0 wt.-%. For random heterophasic propylene copolymers according to the present invention, the amount XCS of the present invention will generally be slightly higher than the according amount of soluble fraction (SF).

### Crystalline fraction of the CRYSTEX QC measurement:

The crystalline fraction (CF) of the CRYSTEX QC measurement is preferably present in the polymer base resin in an amount of from 45.0 to 73.0 wt.-% based on the total weight of the random heterophasic propylene copolymer, preferably in the range of 46.0 to 70.0 wt.-%, like more preferably in the range of 47.0 - 67.0 wt.-%.

The comonomer content, of the crystalline fraction (CF) may be in the range of 3.0 to 8.0 wt.-%; preferably in the range of 3.3 to 6.5 wt.-%; more preferably in the range of 3.6 to 5.5 wt.-%, based on the total amount of monomer units in the crystalline fraction. Thereby, the remaining amount of monomer units of the crystalline fraction (CF) making up to 100 wt.-% is the amount of propylene monomer units.

The comonomer units of the crystalline fraction (CF) are preferably selected from one or more comonomer units selected from ethylene and alpha-olefins with 4 to 12 carbon atoms, more preferably the comonomer units are selected from ethylene, 1- butene, 1-hexene and 1-octene. It is preferred that the crystalline fraction (CF) only contains one sort of comonomer units as defined above. In an especially preferred embodiment, the comonomer units of the crystalline fraction (CF) are ethylene comonomer units.

The Intrinsic Viscosity (IV) of the Crystalline fraction (IV of CF) of the inventive polymer may be in the range of 1.4 to 3.0 dl/g; preferably in the range of 1.6 to 2.8 dl/g; more preferably in the range of 1.7 to 2.6 dl/g.

### Soluble fraction (SF) of the CRYSTEX QC measurement

The soluble fraction (SF) of the CRYSTEX QC measurement is preferably present in the polymer base resin in an amount of from 27.0 to 55.0 wt.-%; preferably in the range of 30.0 to 54.0 wt.-%; more preferably in the range of 33.0 to 53.0 wt.-%., based on the total amount of polymer base resin.

The soluble fraction (SF) has a comonomer content of from 12.0 to 16.5 wt.-%, preferably 12.5 to 16.0 wt.-% based on the total amount of monomer units in the soluble fraction (SF). Thereby, the remaining amount of monomer units of the soluble fraction (SF) making up to 100 wt.-% is the amount of propylene monomer units. The comonomer units of the soluble fraction (SF) are preferably selected from one or more comonomer unit(s) selected from ethylene and alpha-olefins with 4 to 12 carbon atoms, more preferably the comonomer units are selected from ethylene, 1-butene, 1- hexene and 1-octene. It is preferred that the soluble fraction (SF) only contains one sort of comonomer units as defined above. In an especially preferred embodiment, the comonomer units of the soluble fraction (SF) are ethylene comonomer units.

The Intrinsic Viscosity of the soluble fraction (IV of SF) of the inventive polymer may be in the range of 1.4 to 3.0 dl/g; preferably in the range of 1.6 to 2.8 dl/g; more preferably in the range of 1.7 to 2.6 dl/g.

### The Ratio C2 of SF to C2 of CF

The random heterophasic propylene copolymer has a specific ratio between the comonomer contents of the soluble fraction and comonomer content of the crystalline fraction: the ratio of the comonomer contents of the soluble fraction (C2 of SF) to the comonomer contents of the crystalline fraction (C2 of CF) may be in the range of 2.0 to 4.9; preferably in the range of 2.1 to 4.7; more preferably in the range of 2.2 to 4.5.

According to a preferred embodiment, the random heterophasic propylene copolymer according to any of the preceding claims are characterized by a co-continuous morphology (CCM) within the random heterophasic propylene copolymer formed by the crystalline and the amorphous phase. Said CCM is defined as a phase structure in which both crystalline matrix and amorphous elastomeric phase are continuous when considered on a three-dimensional level. Definitions for CCM can be found for example in Willemse et al, Polymer 40 (1999) 827-834 and Carolan et al, Computational Material Science 98 (2015) 24-33.

### The existence of a CCM can be assessed by high resolution microscopy techniques like scanning force microscopy (AFM), scanning electron microscopy (SEM) or transmission electron microscopy (TEM). Sample preparation for correctly determining phase morphology may involve a combination of cryo-cutting, contrasting and etching techniques as generally known in the art.

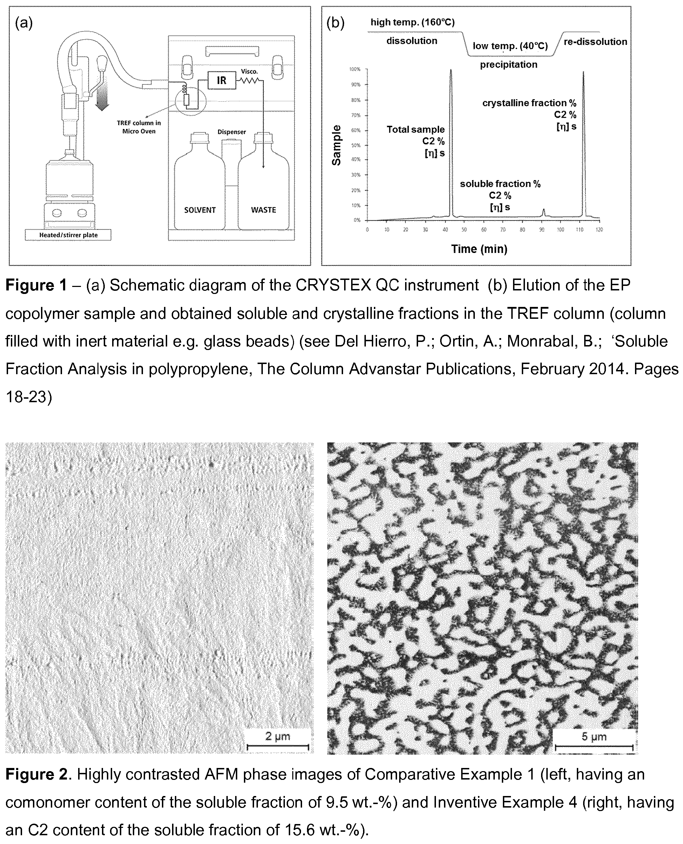

Figure 2 shows such scanning force microscopy photographs.

### Process

### Polymerization:

Preferably, the matrix phase of the polymer base resin is polymerized prior to the elastomeric phase of the polymer base resin in the process of the present invention. Thereby, preferably the matrix phase makes up the propylene random copolymer polymerized in process step a) and the elastomeric phase makes up the second propylene copolymer polymerized in process step c). It is well understood by a person skilled in the art that the first propylene random copolymer preferably reflecting the matrix phase is usually not identical to the crystalline fraction (CF) in the CRYSTEX QC measurement and that the second propylene copolymer preferably reflecting the elastomeric phase is usually not identical to the soluble fraction (SF) in the CRYSTEX Q.

Process step a) can be conducted in a single polymerization reactor. In said embodiment the matrix phase is a unimodal propylene homo- or copolymer. Process step a) can also be conducted in two or more polymerization reactors, such as 2, 3 or 4 polymerization reactors, most preferably 2 polymerization reactors, connected in series. This means that in a first polymerization reactor of process step a) a first part of the first propylene random copolymer is polymerized in the presence of a single-site catalyst to produce a first part of a first polymerization mixture comprising a first part of the first propylene random copolymer and the single-site catalyst, which may be either a homo or random copolymer, transferring the first part of the first polymerization mixture into a second polymerization reactor of process step a) and polymerizing a second part of the first propylene random copolymer (which may also be a homo- or random copolymer) in the presence of the single site catalyst in the presence of said first part of the first propylene homo- or random copolymer to produce a second part of the first polymerization mixture comprising the first and second part of the first propylene homo- or random copolymer and the single site catalyst. These process steps can be repeated further in one or more additional subsequent polymerization reactor(s) of the process step a).

At least one of the polymerization steps of process step a) must produce a propylene random copolymer to provide the crystalline propylene random copolymer matrix of the random heterophasic propylene copolymer of the present invention.

In another embodiment the second part of the first polymerization mixture reflects the first polymerization mixture of process step a) which is then transferred to the second polymerization reactor in process step b). The polymerization conditions in the first, second and optionally subsequent polymerization reactor(s) of process step a) can be comparable. In said embodiment the matrix phase is a unimodal propylene random copolymer. Alternatively, the polymerization conditions in the first, second and optionally subsequent polymerization reactor(s) of process step a) can be different from each other, especially in one or more of polymerization temperature, polymerization pressure, comonomer feed or chain transfer agent feed. In said embodiment the matrix phase is a multimodal propylene random copolymer. In the case of two polymerization reactors in series of said embodiment the matrix phase is a bimodal propylene random copolymer. In said embodiment, it is possible to polymerize a propylene homopolymer in one or more of the polymerization reactors and a propylene random copolymer in one or more of the polymerization reactors. In said embodiment the matrix phase is a multimodal propylene copolymer comprising a propylene homopolymer fraction and a propylene random copolymer fraction. It is especially preferred that a propylene homopolymer is polymerized in one polymerization reactor and a propylene random copolymer is polymerized in the other polymerization reactor of a two reactor sequence to polymerize a matrix phase with one propylene homopolymer fraction and one propylene random copolymer fraction. There is no special preference in the sequence of the polymerization of the fractions of the matrix phase.

Preferably, the amorphous propylene elastomer (b) of the polymer base resin is polymerized after and in the presence of the matrix phase of the polymer base resin in the process of the present invention.

Thereby, preferably the amorphous propylene elastomer makes up the second propylene copolymer polymerized in process step c) and the crystalline matrix phase makes up the first propylene random copolymer polymerized in process step a). Process step c) can be conducted in a single polymerization reactor. In said embodiment the elastomeric phase is a unimodal propylene copolymer. Process step c) can also be conducted in two or more polymerization reactors, such as 2, 3 or 4 polymerization reactors, most preferably 2 polymerization reactors, connected in series. This means that in a first polymerization reactor of process step c) a first part of the second propylene copolymer is polymerized in the presence of a single-site catalyst to produce a first part of a second polymerization mixture comprising a first part of the second propylene copolymer, the first propylene homo- or copolymer and the single-site catalyst, transferring the first part of the second polymerization mixture into a second polymerization reactor of process step c) and polymerizing a second part of the second propylene copolymer in the presence of the single site catalyst in the presence of said first part of the second propylene copolymer to produce a second part of the second polymerization mixture comprising the first and second part of the second propylene copolymer, the first propylene homo- or copolymer and the single site catalyst.

These process steps can be repeated further in one or more additional subsequent polymerization reactor(s) of the process step c). In another embodiment the second part of the second polymerization mixture reflects the second polymerization mixture of process step c) which is then withdrawn from the second polymerization reactor of process step c) in process step d). The polymerization conditions in the first, second and optionally subsequent polymerization reactor(s) of process step c) can be comparable. In said embodiment the elastomeric phase is a unimodal propylene copolymer. Alternatively, the polymerization conditions in the first, second and optionally subsequent polymerization reactor(s) of process step c) can be different from each other, especially in one or more of polymerization temperature, polymerization pressure, comonomer feed or chain transfer agent feed. In said embodiment the elastomeric phase is a multimodal propylene copolymer. In the case of two polymerization reactors in series of said embodiment the elastomeric phase is a bimodal propylene copolymer.

In said embodiment, it is possible to polymerize propylene copolymers with different comonomers in the two or more of the polymerization reactors. In said embodiment the elastomeric phase is a multimodal propylene copolymer comprising a propylene copolymer fraction with one comonomer and a propylene copolymer fraction with another comonomer. There is no special preference in the sequence of the polymerization of the fractions of the elastomeric phase.

Preferably, the first polymerization reactor is operating in bulk, such as a loop reactor and all subsequent polymerization reactors, preferably including the optional second and subsequent polymerization reactor(s) of process step a), are operating in gas phase. It is preferred that the polymerization steps of the process of the present invention are carried out in a bulk polymerization reactor, preferably a loop reactor, followed by one or more, such as 1, 2, 3 or 4, preferably 1 or 2 gas phase reactors, connected in series.

Process step a) can also be preceded by a prepolymerization step. In said embodiment it is preferred that the polymerization steps of the process of the present invention are carried out in a prepolymerization reactor, followed by a bulk polymerization reactor, preferably a loop reactor, followed by one or more, such as 1, 2, 3 or 4, preferably 1 or 2 gas phase reactors, connected in series.

The polymerization conditions, such as polymerization temperature, polymerization pressure, propylene feed, comonomer feed, chain transfer agent feed or residence time of the different polymerization steps are not particularly limited. It is well known to a person skilled in the art how to adjust these polymerization conditions in order to adjust the properties of the first propylene homo- or copolymer and the second propylene copolymer. The residence time in process steps a) and c) are preferably selected as such that the weight ratio of the first propylene homo- or copolymer to the second propylene copolymer is in the range of from 35:65 to 55:45. Preferably the weight ratio of said first propylene homo- or copolymer to said second propylene copolymer is in the range of from 40:60 to 60:40, more preferably in the range of from 45:55 to 55:45

The comonomer content of the propylene random copolymer produced during process step a) may be in the range of 1.0 to 6.0 wt.-%; preferably in the range of 1.5 to 5.2 wt.-%; more preferably in the range of 2.0 to 4.5 wt.-%, based on the total weight of the propylene random copolymer produced in said process step a).
Preferably the comonomer is ethylene.

The comonomer content of the amorphous propylene elastomer produced during process step c) may be in the range of 6.0 to 20.0 wt.-%; preferably in the range of 8.0 to 18 wt.-%; more preferably in the range of 10.0 to 15.5 wt.-%. Preferably the comonomer is ethylene.

In a preferred embodiment the amorphous propylene elastomer is produced in the presence of the propylene random copolymer forming the crystalline matrix. Hence, the skilled person is aware, that the comonomer content of the amorphous propylene elastomer produced during process step c) cannot be directly measured, but is calculated based on the properties of the propylene random copolymer forming the crystalline matrix and the properties of the random heterophasic propylene copolymer available at the end of the process step c) or (in case of bi- or multimodal amorphous propylene elastomer) any sub-steps therein.

### Post-polymerization treatment

After withdrawing the second polymerization mixture from the second polymerization reactor the second polymerization mixture is compounded to form the random heterophasic propylene copolymer of the present invention. Thereby, the second polymerization mixture can be mixed with the additives as described above and optionally with other polymeric components. Before compounding the second polymerization mixture can be treated with the usual post-polymerization treatments as known in the art such as catalyst deactivation, separation of reactants, post-polymerization reaction of the polymer such as vis-breaking or nucleation etc. These post-polymerization treatments are well known to a person skilled in the art. Compounding can be conducted in mixers or extruder using suitable compounding conditions. It is preferred that the random heterophasic polypropylene copolymer is produced by compounding and pelletizing.

### Catalyst:

The random heterophasic propylene copolymer of the present invention is polymerized in the presence of a single-site catalyst. The catalyst used in the invention can be used in non-supported form or in solid form. The catalyst of the invention should however be used as a heterogeneous (solid) catalyst.

Generally, the quantity of catalyst will depend upon the nature of the catalyst, the selected reactor types and conditions and the properties desired for the polypropylene composition.

The catalyst of the invention in solid form, preferably in solid particulate form, can be either supported on an external carrier material, like clay minerals, silica or alumina, or is free from an external carrier, however still being in solid form.

Preferably, the single site catalyst suitable for the present invention is represented by formula [I] as provided here below. 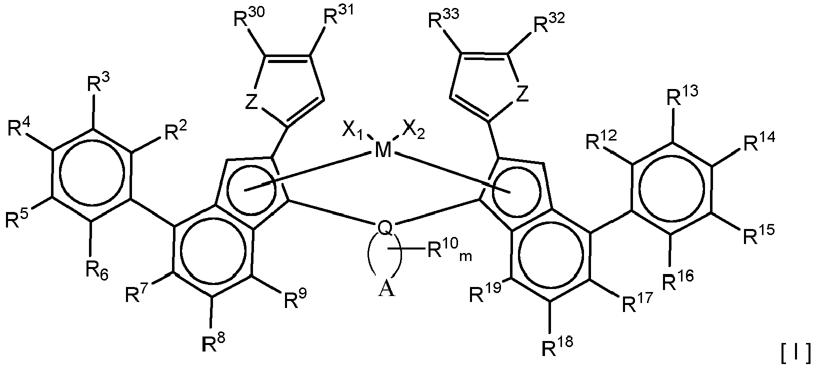
M is Ti, Zr or Hf.
Z is an oxygen atom or a sulfur atom, R³⁰, R³¹, R³² and R³³ may be the same or different and are a hydrogen atom, a halogen atom, an alkyl group having a carbon number of 1 to 6, an alkoxy group having a carbon number of 1 to 6, a halogen-containing alkyl group having a carbon number of 1 to 6, or an aryl group having a carbon number of 6 to 18.
Q is a carbon atom, a silicon atom or a germanium atom.
Each of X¹ and X² is independently a halogen atom, an alkyl group having a carbon number of 1 to 6, an aryl group having a carbon number of 6 to 18, an amino group substituted with an alkyl group having a carbon number of 1 to 6, an alkoxy group having a carbon number of 1 to 6, a halogen-containing alkyl group having a carbon number of 1 to 6, or a halogen-containing aryl group having a carbon number of 6 to 18.
R⁷ and R¹⁷ may be
   the same or different and are a hydrogen atom, a halogen atom, an alkyl group having a carbon number of 1 to 6, an alkoxy group having a carbon number of 1 to 6, a halogen-containing alkyl group having a carbon number of 1 to 6, an aryl group having a carbon number of 6 to 18, or a halogen-containing aryl group having a carbon number of 6 to 18, and when either one of R⁷ and R¹⁷ is a hydrogen atom, the other is a substituent except for a hydrogen atom.
R⁸ and R¹⁸ may be the same or different and are a hydrogen atom, a halogen atom, an alkyl group having a carbon number of 1 to 6, an alkoxy group having a carbon number of 1 to 6, a halogen-containing alkyl group having a carbon number of 1 to 6, or a halogen-containing aryl group having a carbon number of 6 to 18.
R², R³, R⁴, R⁵, R⁶, R⁹, R¹², R¹³, R¹⁴, R¹⁵, R¹⁶ and R¹⁹ may be the same or different and are a hydrogen atom, a halogen atom, an alkyl group having a carbon number of 1 to 6, an alkoxy group having a carbon number of 1 to 6, a halogen-containing alkyl group having a carbon number of 1 to 6,
   an aryl group having a carbon number of 6 to 18, a halogen-containing aryl group having a carbon number of 6 to 18.
A is a divalent hydrocarbon group having a carbon number of 3 to 12 and forming a ring together with Q to which it is bonded, and may contain an unsaturated bond.
R¹⁰ is a substituent on A and is an alkyl group having a carbon number of 1 to 6, a halogen containing alkyl group having a carbon number of 1 to 6, a trialkylsilyl group-containing alkyl group having a carbon number of 1 to 6, a silyl group containing a hydrocarbon group having a carbon number of 1 to 6, an aryl group having a carbon number of 6 to 18, or a halogen-containing aryl group having a carbon number of 6 to 18.

Further, m represents an integer of 0 to 24, and when m is 2 or more, R¹⁰s may combine with each other to form a new ring structure).

In formula [I], specific examples of the alkyl group having a carbon number of 1 to 6 include a methyl group, an ethyl group, an n-propyl group, an i-propyl group, an n-butyl group, an i-butyl group, an s-butyl group, a tert-butyl group, an n-pentyl group, an n-hexyl group, a cyclopropyl group, a cyclopentyl group, and a cyclohexyl group.

Specific examples of the alkoxy group having a carbon number of 1 to 6 include a methoxy group, an ethoxy group, a n-propoxy group, an i-propoxy group, a n-butoxy group, a i-butoxy group, a tert-butoxy group, and a phenoxy group.

The aryl group having a carbon number of 6 to 18 may be substituted with a hydrocarbon group having a carbon number of 1 to 6, and specific examples of the aryl group include a phenyl group, a tolyl group, a dimethylphenyl group, an ethylphenyl group, a trimethylphenyl group, a tert-butylphenyl group, a di-tert-butylphenyl group, a biphenyl group, a 1-naphthyl group, a 2-naphthyl group, an acenaphthyl group, a phenanthryl group, and an anthryl group.

In formula [I], the halogen atom includes a chlorine atom, a bromine atom, an iodine atom, and a fluorine atom.

The amino group substituted with an alkyl group having a carbon number of 1 to 6 includes a dimethylamino group, a diethylamino group, a di-n-propylamino group, a di-i-propylamino group, a methylethylamino group, etc.

The halogen atom in the halogen-containing alkyl group having a carbon number of 1 to 6 includes a fluorine atom, a chlorine atom, a bromine atom, and an iodine atom. The halogen-containing alkyl group having a carbon number of 1 to 6 is an alkyl group where a hydrogen atom on the skeleton of an alkyl group having a carbon number of 1 to 6 is replaced by a halogen atom.

Specific examples thereof include a fluoromethyl group, a difluoromethyl group, a trifluoromethyl group, a chloromethyl group, a dichloromethyl group, a trichloromethyl group, a bromomethyl group, a dibromomethyl group, a tribromomethyl group, an iodomethyl group.

In formula [I], the halogen-containing aryl group having a carbon number of 6 to 18 is specifically, for example,an aryl group in which a hydrogen atom of the above-described aryl group having a carbon number of 6 to 18 is replaced by a halogen atom, and specific examples thereof include 2-, 3- and 4-substituted fluorophenyl groups, 2-, 3- and 4-substituted chlorophenyl groups, 2-, 3- and 4-substituted bromophenyl groups, 2,4-, 2,5-, 2,6- and 3,5-substituted difluorophenyl groups, 2,4-, 2,5-, 2,6-, and 3,5-substituted dichlorophenyl groups, 2,4,6-, 2,3,4-, 2,4,5-, and 3,4,5-substituted trifluorophenyl groups, 2,4,6-, 2,3,4-, 2,4,5-, and 3,4,5-substituted trichlorophenyl groups, a pentafluorophenyl group, a pentachlorophenyl group, a 3,5-dimethyl-4-chlorophenyl group.

In formula [I], specific examples of the furyl group, the thienyl group, the furyl group having a substituent, and the thienyl group having a substituent include a 2-furyl group, a 2-(5-methylfuryl) group, a 2-(5-ethylfuryl) group, a 2-(5-n-propylfuryl) group, a 2-(5-i-propylfuryl) group, a 2-(5-tert-butylfuryl) group, a 2-(5-trimethylsilylfuryl) group, a 2-(5-triethylsilylfuryl) group, a 2-(5-phenylfuryl) group, a 2-(5-tolylfuryl) group, a 2-(5-fluorophenylfuryl) group, a .2-(5-chlorophenylfuryl) group, a 2-(4,5-dimethylfuryl) group, a 2-(3,5-dimethylfuryl) group, a 2-benzofuryl group, a 3-furyl group, a 3-(5-methylfuryl) group, a 3-(5-ethylfuryl) group, a 3-(5-n-propylfuryl) group, a 3-(5-i-propylfuryl) group, a 3-(5-tertbutylfuryl) group, a 3-(5-trimethylsilylfuryl) group, a 3-(5-triethylsilylfuryl) group, a 3-(5-phenylfuryl) group, a 3-(5-tolylfuryl) group, a 3-(5-fluorophenylfuryl) group, a 3-(5-chlorophenylfuryl) group, a 3-(4,5-dimethylfuryl) group, a 3-benzofuryl group, a 2-thienyl group, a 2-(5-methylthienyl) group, a 2-(5-ethylthienyl) group, a 2-(5-n-propylthienyl) group, a 2-(5-ipropylthienyl) group, a 2-(5-tert-butylthienyl) group, a 2-(5-trimethylsilylthienyl) group, a 2-(5-triethylsilylthienyl) group,a 2-(5-phenylthienyl) group, a 2-(5-tolylthienyl) group, a 2-(5-fluorophenylthienyl) group, a 2-(5-chlorophenylthienyl)group, a 2-(4,5-dimethylthienyl) group, a 2-(3,5-dimethylthienyl) group, a 2-benzothienyl group, a 3-thienyl group, a 3-(5- methylthienyl) group, a 3-(5-ethylthienyl) group, a 3-(5-n-propylthienyl) group, a 3-(5-i-propylthienyl) group, a 3-(5-tertbutylthienyl) group, a 3-(5-trimethylsilylthienyl) group, a 3-(5-triethylsilylthienyl) group, a 3-(5-phenylthienyl) group, a 3-(5-tolylthienyl) group, a 3-(5-fluorophenylthienyl) group, a 3-(5-chlorophenylthienyl) group, a 3-(4,5-dimethylthienyl) group, and a 3-benzothienyl group.

In formula [I], M is Ti, Zr or Hf, preferably Zr or Hf, more preferably Zr. Q is a carbon atom, a silicon atom or a germanium atom, preferably a silicon atom or a germanium atom.

Each of X¹ and X² is independently a halogen atom, an alkyl group having a carbon number of 1 to 6, an aryl group having a carbon number of 6 to 18, an amino group substituted with an alkyl group having a carbon number of 1 to 6, an alkoxy group having a carbon number of 1 to 6, a halogen-containing alkyl group having a carbon number of 1 to 6, or a halogen-containing aryl group having a carbon number of 6 to 18.

Among these, a halogen atom and a hydrocarbon group having a carbon number of 1 to 6 are preferred, and specifically, a chlorine atom, a bromine atom, an iodine atom, a methyl group, an ethyl group, an i-butyl group, and a phenyl group are more preferred.

R⁷ and R¹⁷ may be the same or different and are a hydrogen atom, a halogen atom, an alkyl group having a carbon number of 1 to 6, an alkoxy group having a carbon number of 1 to 6, a halogen-containing alkyl group having a carbon number of 1 to 6,an aryl group having a carbon number of 6 to 18, or a halogen-containing aryl group having a carbon number of 6 to 18, and when either one of R⁷ and R¹⁷ is a hydrogen atom, the other is a substituent except for a hydrogen atom. R⁷ and R¹⁷ are preferably an alkyl group having a carbon number of 1 to 6 or an alkoxy group having a carbon number of 1 to 6, more preferably an alkyl group having a carbon number of 1 to 6. Among others, R⁷ and R¹⁷ are preferably a methyl group.

R⁸ and R¹⁸ may be the same or different and are a hydrogen atom, a halogen atom, an alkyl group having a carbon number of 1 to 6, an alkoxy group having a carbon number of 1 to 6, a halogen-containing alkyl group having a carbon number of 1 to 6, an aryl group having a carbon number of 6 to 18, or a halogen-containing aryl group having a carbon number of 6 to 18. R⁸ and R¹⁸ are preferably an alkyl group having a carbon number of 1 to 6. Among others, R⁸ and R¹⁸ are preferably a methyl group.

In preferred embodiment, the R⁷ and R¹⁷ and R⁸ and R¹⁸ are identical and preferably selected from an alkyl group having a carbon number of 1 to 6. Especially preferred is that R⁷ and R¹⁷ and R⁸ and R¹⁸ are methyl groups.

R², R³, R⁴, R⁵, R⁶, R⁹, R¹², R¹³, R¹⁴, R¹⁵, R¹⁶ and R¹⁹ may be the same or different and are a hydrogen atom, a halogen atom, an alkyl group having a carbon number of 1 to 6, an alkoxy group having a carbon number of 1 to 6, a halogen-containing alkyl group having a carbon number of 1 to 6, an aryl group having a carbon number of 6 to 18.

R⁹ and R¹⁹, which are a substituent on an indenyl group, are preferably a hydrogen atom, an alkyl group having a carbon number of 1 to 6, or an alkoxy group having a carbon number of 1 to 6, more preferably a hydrogen atom.

R², R³, R⁴, R⁵, R⁶, R¹², R¹³, R¹⁴, R¹⁵ and R¹⁶, which are a substituent of a phenyl group on the 4-position of an indenyl group, are preferably a hydrogen atom, a halogen atom, an alkyl group having a carbon number of 1 to 6, a trialkylsilyl group-containing alkyl group having a carbon number of 1 to 6, or an aryl group having a carbon number of 6 to 18. In addition, R², R⁶, R¹² and R¹⁶ are preferably a hydrogen atom.

In formula [I], the substituent R³¹ is preferably a hydrogen atom, a halogen atom, an alkyl group having a carbon number of 1 to 6, or an aryl group having a carbon number of 6 to 18, more preferably a hydrogen atom or an alkyl group having a carbon number of 1 to 6. The substituent R³⁰ is preferably a halogen atom, an alkyl group having a carbon number of 1 to 6, or an aryl group having a carbon number of 6 to 18, more preferably an alkyl group having a carbon number of 1 to 6 or an aryl group having a carbon number of 6 to 18.

A is a divalent hydrocarbon group having a carbon number of 3 to 12 and forming a ring together with Q to which it is bonded, and may contain an unsaturated bond. A is preferably a divalent hydrocarbon group having a carbon number of 3 to 6 and forming a 4-to 7-membered ring, and A is more preferably a divalent hydrocarbon group having a carbon number of 3 or 4 and forming a 4- or 5-membered ring.

R¹⁰ is a substituent on A and is an alkyl group having a carbon number of 1 to 6, a halogen-containing alkyl group having a carbon number of 1 to 6, an aryl group having a carbon number of 6 to 18, or a halogen-containing aryl group having a carbon number of 6 to 18. R¹⁰ is preferably an alkyl group having a carbon number of 1 to 6, more preferably a methyl group.

Further m represents an integer of 0 to 24, and when m is 2 or more, R¹⁰s may combine with each other to form a new ring structure. m is preferably an integer of 0 to 6, and m is more preferably 0.

Specific examples of 5,6-dimethylindenyl skeleton when Q and A form a 4-membered ring
(1) Dichlorosilacyclobutylenebis[2-(2-furyl)-4-phenyl-5,6-dimethyl-1-indenyl] zirconium
(2) Dichlorosilacyclobutylenebis[2-(5-methyl-2-furyl)-4-phenyl-5,6-dimethyl-1-indenyl]-zirconium
(3) Dichlorosilacyclobutylenebis[2-(4,5-dimethyl-2-furyl)-4-phenyl-5,6-dimethyl-1-indenyl] zirconium
(4) Dichlorosilacyclobutylenebis[2-(5-tert-butyl-2-furyl)-4-phenyl-5,6-dimethyl-1-indenyl] zirconium
(5) Dichlorosilacyclobutylenebis[2-(5-phenyl-2-furyl)-4-phenyl-5,6-dimethyl-1-indenyl] zirconium
(6) Dichlorosilacyclobutylenebis[2-(2-thienyl)-4-phenyl-5,6-dimethyl-1-indenyl] zirconium
(7) Dichlorosilacyclobutylenebis[2-(5-methyl-2-thienyl)-4-phenyl-5,6-dimethyl-1-indenyl] zirconium
(8) Dichlorosilacyclobutylenebis[2-(5-methyl-2-furyl)-4-(4-fluorophenyl)-5,6-dimethyl-1-indenyl] zirconium
(9) Dichlorosilacyclobutylenebis[2-(5-methyl-2-furyl)-4-(4-chlorophenyl)-5,6-dimethyl-1-indenyl] zirconium
(10) Dichlorosilacyclobutylenebis[2-(5-methyl-2-furyl)-4-(4-methylphenyl)-5,6-dimethyl-1-indenyl] zirconium
(11) Dichlorosilacyclobutylenebis[2-(5-methyl-2-furyl)-4-(4-tert-butylphenyl)-5,6-dimethyl-1-ind enyl] zirconium
(12) Dichlorosilacyclobutylenebis[2-(5-methyl-2-furyl)-4-(3,5-dimethylphenyl)-5,6-dimethyl-1-indenyl] zirconium
(13) Dichlorosilacyclobutylenebis[2-(5-methyl-2-furyl)-4-(3,5-di-tert-butylphenyl)-5,6-dimethyl-1-indenyl] zirconium
(14) Dichlorosilacyclobutylenebis[2-(5-methyl-2-furyl)-4-(1-naphthyl)-5,6-dimethyl-1-indenyl] zirconium
(15) Dichlorosilacyclobutylenebis[2-(5-methyl-2-furyl)-4-(2-naphthyl)-5,6-dimethyl-1-indenyl] zirconium
(16) Dichlorosilacyclobutylenebis[2-(5-methyl-2-furyl)-4-(4-biphenylyl)-5,6-dimethyl-1-indenyl] zirconium

The component (B), i.e., a compound reacting with the component (A) to form an ion pair, or an ion-exchange layered silicate, includes an aluminium oxy compound, a boron compound, an ion-exchange layered silicate, etc. and is preferably an ion-exchange layered silicate. As the component (B), one of these compounds may be used alone, or two or more thereof may be mixed and used.

The ion-exchange layered silicate (hereinafter, sometimes simply referred to as "silicate") indicates a silicate compound having a crystal structure in which planes each constituted by an ionic bond, etc. are stacked one another in parallel by a bonding force, and contained ions are exchangeable.

In the present invention, the silicate preferably used as the component (B) is one belonging to a smectite group and specifically includes montmorillonite, sauconite, beidellite, nontronite, saponite, hectorite, stevensite, etc. Among these, in view of activity and molecular weight of the rubber component, montmorillonite is preferred.

Most natural silicates are produced as a main component of clay mineral, and impurities (e.g., quartz, cristobalite) other than the ion-exchange layered silicate are contained in many cases. Impurities may be contained in the smectite group silicate for use in the present invention.

Further details of component B are disclosed in EP3121187 A1, filed by Japan Polypropylene Corporation Tokyo.

### Articles

The present invention is furthermore directed to an article comprising the random heterophasic propylene copolymer as defined herein or the use of the random heterophasic propylene copolymer as defined herein for the production of an article.

According to one embodiment of the invention, the random heterophasic propylene copolymer as defined can be used for the production of films, extruded, blow moulded or injection moulded articles, such as pouches and bags, flexible pipes and tubes, as well as collapsible transport packaging containers

The present invention will now be described in further detail by the examples provided below:

### Examples:

### Measuring methods

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg.

### Differential scanning calorimetry (DSC)

Differential scanning calorimetry (DSC) analysis, melting temperature (Tₘ) and melt enthalpy (Hₘ), crystallization temperature (T_{c}), and heat of crystallization (H_{c}, H_{CR}) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature (T_{c}) and heat of crystallization (H_{c}) are determined from the cooling step, while melting temperature (Tₘ) and melt enthalpy (Hm) are determined from the second heating step.

### GPC

### Number average molecular weight (Mn), weight average molecular weight (Mw) and molecular weight distribution (MWD)

Molecular weight averages (Mw, Mn), and the molecular weight distribution (MWD), i.e. the Mw/Mn (wherein Mn is the number average molecular weight and Mw is the weight average molecular weight), were determined by Gel Permeation Chromatography (GPC) according to ISO 16014-4:2003 and ASTM D 6474-99. A PolymerChar GPC instrument, equipped with infrared (IR) detector was used with 3 x Olexis and Ix Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 µL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

### Xylene Cold Soluble (XCS)

Xylene Cold Soluble fraction at room temperature (XCS, wt.-%) is determined at 25°C according to ISO 16152; 5^{th} edition; 2005-07-01.

### Dynamic Mechanical Thermal Analysis (DMTA)

The glass transition temperature Tg is determined by dynamic mechanical thermal analysis (DMTA) according to ISO 6721-7. The measurements are done in torsion mode on compression moulded samples (40x10x1 mm3) between -100 °C and +150 °C with a heating rate of 2 °C/min and a frequency of 1 Hz. Storage modulus G' is determined at +23°C according ISO 6721-7:1996. The measurements are done in torsion mode on compression moulded samples (40x10x1 mm3) between -150 °C and +150 °C with a heating rate of 2 °C/min and a frequency of 1 Hz.

### Flexural Modulus

The flexural modulus was determined in 3-point-bending at 23°C according to ISO 178 on 80x10x4 mm³ test bars injection moulded in line with EN ISO 1873-2.

### Tensile modulus

Tensile Modulus is measured according to ISO 527 using an injection moulded specimen, geometry 5A (small dog-bone) prepared as described in EN ISO 1873-2.

### Notched impact strength (NIS):

The Charpy notched impact strength (NIS) was measured according to ISO 179 1eA at +23°C or -20 °C, using injection moulded bar test specimens of 80x10x4 mm³ prepared in accordance with EN ISO 1873-2.

### Haze and Clarity

Haze was determined according to ASTM D1003-00 on 60x60x1 mm³ plaques injection moulded in line with EN ISO 1873-2. Haze₁ denominates a haze value determined on 1 mm thick plaques.

### Crystex analysis

### Crystalline and soluble fractions method

The crystalline (CF) and soluble fractions (SF) of the polypropylene (PP) compositions as well as the comonomer content and intrinsic viscosities of the respective fractions were analyzed by the CRYSTEX QC, Polymer Char (Valencia, Spain).

A schematic representation of the CRYSTEX QC instrument is shown in Figure 1a. The crystalline and amorphous fractions are separated through temperature cycles of dissolution at 160°C, crystallization at 40°C and re-dissolution in a1,2,4-trichlorobenzene (1,2,4-TCB) at 160°C as shown in Figure 1b. Quantification of SF and CF and determination of ethylene content (C2) are achieved by means of an infrared detector (IR4) and an online 2-capillary viscometer which is used for the determination of the intrinsic viscosity (IV).

The IR4 detector is a multiple wavelength detector detecting IR absorbance at two different bands (CH3 and CH2) for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and various concentration between 2 and 13mg/ml for each used EP copolymer used for calibration. The amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 Wt.-%.

The intrinsic viscosity (IV) of the parent EP copolymer and its soluble and crystalline fractions are determined with a use of an online 2-capillary viscometer and are correlated to corresponding IV's determined by standard method in decalin according to ISO 1628. Calibration is achieved with various EP PP copolymers with IV = 2-4 dL/g.

A sample of the PP composition to be analyzed is weighed out in concentrations of 10mg/ml to 20mg/ml. After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 800rpm.

As shown in a Figure 1a and b, a defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.-%] of the PP composition. During the second injection the soluble fraction (at low temperature) and the crystalline fraction (at high temperature) with the crystallization cycle are measured (wt.-% SF, wt.-% C2, IV).

EP means ethylene propylene copolymer.

PP means polypropylene.

### Material description:

### Catalyst description

### Preparation of the catalyst component for olefin polymerization:

### (a) Acid and base treatment of ion-exchangeable layered silicate particles

Benclay SL, whose major component is 2:1-layered montmorillonite (smectite), was purchased from Mizusawa Industrial Chemicals, Ltd, and used for catalyst preparation. Benclay SL has the following properties:
Dp50 = 46.9 µm
Chemical composition [wt.-%]: Al 9.09, Si 32.8, Fe 2.63, Mg 2.12, Na 2.39, Al/Si 0.289 mol/mol

### Acid Treatment

To a 2L-flask equipped with a reflux condenser and a mechanical agitation unit, 1300 g of distilled water and 168 g of sulfuric acid (96%) were introduced. The mixture was heated to 95 °C by an oil bath, and 200 g of Benclay SL was added. Then the mixture was stirred at 95 °C for 840 min. The reaction was quenched by pouring the mixture into 2 L of pure water. The crude product was filtrated with a Buechner funnel connected with an aspirator and washed with 1 L of distilled water. Then the washed cake was re-dispersed in 902.1 g of distilled water. The pH of the dispersion was 1.7.

### Base treatment

The aqueous solution of LiOH was prepared by solving 3.54 g of lithium hydroxide mono hydrate into 42.11 g of distilled water. Then the aqueous LiOH solution was introduced to a dropping funnel and dripped in the dispersion obtained above at 40 °C. The mixture was stirred at 40 °C for 90 min. The pH of the dispersion was monitored through the reaction and stayed less than 8. The pH of the reaction mixture was 5.68. The crude product was filtrated with a Buechner funnel connected with an aspirator and washed 3 times with 2 L of distilled water each.

The chemically treated ion-exchangeable layered silicate particles were obtained by drying the above cake at 110 °C overnight. The yield was 140.8 g. Then the silicate particles were introduced into a 1 L-flask and heated to 200 °C under vacuum. After confirming that gas generation was stopped, the silicate particles were dried under vacuum at 200 °C for 2h. The catalyst component for olefin polymerization of the present innovation was obtained.

### Preparation of olefin polymerization catalyst

### (b) Reaction with organic aluminum

To a 1000 ml flask, 10 g of the chemically treated ion exchangeable layered silicate particles obtained above (the catalyst component for olefin polymerization of the present invention) and 36 ml of heptane were introduced. To the flask, 64 ml of heptane solution of tri-*n*-octyl-alumiunum (TnOA), which includes 25 mmol of TnOA, was introduced. The mixture was stirred at ambient temperature for 1 h. The supernatant liquid was removed by decantation, and the solid material was washed twice with 900 ml of heptane. Then the total volume of reaction mixture was adjusted to 50 ml by adding heptane.

### (c) prepolymerization

To the heptane slurry of the ion-exchangeable layered silicate particles treated with TnOA as described above, 31 ml of heptane solution of TnOA (12.2 mmol of TnOA) was added.

To a 200 ml flask, 283 mg of (r)-dichlorosilacyclobutylene-bis [2-(5-methyl-2-furyl)-4-(4-t-butylphenyl)-5,6-dimethyl-1-indenyl] zirconium (300 µmol) and 30 ml of toluene were introduced. Then the obtained complex solution was introduced to the heptane slurry of the silicate particles. The mixture was stirred at 40 °C for 60 min.

Then the mixture was introduced into a 1L-autoclave with a mechanical stirrer, whose internal atmosphere was fully replaced with nitrogen in advance of use. The autoclave was heated to 40 °C. After confirming the internal temperature was stable at 40 °C, propylene was introduced at the rate of 10 g/h at 40 °C. Propylene feeding was stopped after 2 h and the mixture was stirred at 40 °C for 1h.

Then the residual propylene gas was purged out and reaction mixture was discharged into a glass flask. The supernatant solvent was discharged after settling enough. Then 8.3 ml of heptane solution of TiBAL (6 mmol) was added to the solid part. The mixture was dried under vacuum. The yield of solid catalyst for olefin polymerization (prepolymerized catalyst) was 35.83 g. Prepolymerization degree (the weight of prepolymer devided by the weight of solid catalyst) was 2.42.

### Polymerization conditions

All polymerizations were done in a stirred autoclave with a volume of 21.2 dm³ with the catalyst as described above.

### Reactor preparation

The autoclave containing 0.4 barg propylene was filled with additional 3960 g propylene. 0.24 - 0.48 mmol triethylaluminium (0.62 mol/l solution in heptane) were added using a stream of 240 g propylene. The desired amount of hydrogen was fed using a flow controller and the solution was stirred at 20 °C for at least 20 min.

### Catalyst

The desired amount of prepolymerized catalyst was weighed into a 5 ml steel vial inside a glove box. Then the vial was attached to the polymerization autoclave and a second 5 ml vial containing 4 ml n-heptane and pressurised with 10 bars of nitrogen was added on top. The valve between the two vials was opened and the solid catalyst was contacted with heptane under nitrogen pressure for 2 s. Then it was flushed into the reactor with 240 g propylene.

### Prepolymerization and bulk

For prepolymerization the reactor was stirred at 20 °C for the desired time. Then the temperature was raised to the bulk temperature of 70 °C. If needed, ethylene and additional hexene were fed. The timing for the bulk step started when the reactor temperature exceeded 78 °C. During the polymerization, propylene and ethylene were fed to the reactor with fixed flows in order to compensate monomer consumption. After running the desired time, the stirring speed was reduced and the reactor was flushed to ambient pressure.

### Gas phase copolymerization

If needed, the reactor was evacuated in order to remove residual hydrogen from the previous step. The reactor temperature was adjusted to 70 °C and hydrogen was added with a flow controller. At the same time propylene and ethylene were fed in a fixed ratio until the desired reactor pressure was reached. During the polymerization, the pressure was kept constant by feeding propylene and ethylene in the required ratio. After reaching the desired split, the reaction was stopped by flushing the reactor.

Detailed polymerization settings can be found in the attachment

### Polymer Data

For all samples, the degree of prepolymersation was 2 wt.-%. 4 ml of heptane were used as diluent for the catalyst, and 0.8 ml of triethylaluminum (TEAI) (0.62 mol/l) were used. Temperature during prepolymerization was 20 °C.

**Table 1 Polymerization settings of the inventive and Comparative Examples**

| **Prepolymerization** | | **IE1** | **IE2** | **IE3** | **IE4** |
|---|---|---|---|---|---|
| residence time | min | 10 | 10 | 10 | 10 |
| H2 | ln | 0.310 | 0.310 | 0.310 | 0.310 |

| **Bulk Polymerization** | | | | | |
|---|---|---|---|---|---|
| H2/C3 in liquid phase | mol/kmol | 0.17 | 0.16 | 0.16 | 0.16 |
| C2/C3 in liquid phase | mol/kmol | 32 | 16 | 16 | 22 |
| Temperature bulk | °C | 70 | 70 | 70 | 70 |

| **GPR1** | | | | | |
|---|---|---|---|---|---|
| total H2 in GPR | ln | 1.25 | 0.90 | 0.60 | 0.60 |
| Temperature GPR | °C | 70 | 70 | 70 | 70 |
| residence time GPR. | min | 108 | 36 | 44 | 52 |
| C2/(C2+C3)-ratio GPR | mol/mol | 0.17 | 0.17 | 0.17 | 0.25 |
| overall productivity | kg/g | 39 | 24 | 26 | 44 |

| **GPC** | | | | | |
|---|---|---|---|---|---|
| Mn | kg/mol | | 70 | 79 | 72 |
| Mw | kg/mol | | 228 | 258 | 239 |
| Mz | kg/mol | | 481 | 529 | 481 |
| MWD (Mw/Mn) | | | 3.3 | 3.3 | 3.3 |

**Table 2 Polymerization settings of the Comparative Examples**

| **Prepolymerization** | | **CE1** | **CE2** | **CE3** | **CE4** | **CE5** |
|---|---|---|---|---|---|---|
| residence time | min | 10 | 10 | 10 | 30 | 10 |
| H2 | ln | 0.310 | 0.310 | 0.310 | 0.310 | 0.310 |

| **Bulk Polymerization** | | | | | | |
|---|---|---|---|---|---|---|
| H2/C3 in liquid phase | mol/kmol | 0.16 | 0.10 | 0.11 | 0.12 | 0.16 |
| C2/C3 in liquid phase | mol/kmol | 16 | 28 | 23 | 33 | 22 |
| Temperature Bulk | °C | 70 | 70 | 70 | 70 | 70 |

| **GPR1** | | | | | | |
|---|---|---|---|---|---|---|
| total H2 in GPR | ln | 0.80 | 0.90 | 0.90 | 0.90 | 0.20 |
| Temperature GPR | °C | 70 | 70 | 70 | 70 | 70 |
| residence time GPR. | min | 97 | 180 | 120 | 176 | 61 |
| C2/(C2+C3)-ratio GPR | mol/mol | 0.12 | 0.08 | 0.08 | 0.08 | 0.32 |
| overall productivity | kg/g | 27 | 35 | 39 | 41 | 44 |

| **GPC** | | | | | | |
|---|---|---|---|---|---|---|
| Mn | kg/mol | 64 | - | - | - | 75 |
| Mw | kg/mol | 216 | - | - | - | 282 |
| Mz | kg/mol | 492 | - | - | - | 613 |
| MWD(Mw/Mn) | | 3.4 | - | - | - | 3.8 |

For producing the inventive examples IE1 to IE4 and comparative examples CE1 to CE5 as given in table 2, the polypropylenes powders were compounded with the desired amount of additves (500 ppm of Irganox 1010 (FF); 1000 ppm of Irgafos 168, 500ppm of calcium stearate) in a TSE16 twin screw extruder with melt temperature of 200°C.

CE6 is Borsoft SD233CF, a random heterophasic copolymer, having an MFR230/2.16 of g/10 min and commercially available from Borealis AG, Austria.

### Physical Characterisation

**Table 3: Physical characterisation of the Inventive Examples (IE1 to IE4)**

| | | **IE1** | **IE2** | **IE3** | **IE4** |
|---|---|---|---|---|---|
| MFR | g/10min | 8.2 | 5.1 | 3.1 | 4.1 |
| C2 in bulk | wt.-% | 3.9 | 2.7 | 2.7 | 2.4 |
| C2 in G1 | wt.-% | 12.4 | 12.0 | 12.2 | 14.9 |
| Split in G1 | % | 54 | 50 | 53 | 48 |
| SF | wt.-% | 52.4 | 38.6 | 44.7 | 49 |
| XCS | wt.-% | 53.5 | 39.2 | 45.6 | 49.9 |
| C2 total | wt.-% | 8.5 | 7.4 | 7.7 | 9.38 |

| **Soluble Fraction** | | | | | |
|---|---|---|---|---|---|
| C2(SF) | wt.-% | 12.3 | 12.8 | 12.6 | 15.6 |
| IV(SF) | dl/g | 1.79 | 1.96 | 2.41 | 2.47 |

| **Crystalline Fraction** | | | | | |
|---|---|---|---|---|---|
| C2(CF) | wt.-% | 5.2 | 4.4 | 4.4 | 4.0 |
| IV(CF) | dl/g | 1.9 | 2.0 | 2.0 | 1.8 |
| Ratio C2(SF)/C2(CF) | | 2.4 | 2.9 | 2.9 | 3.9 |
| NIS/23°C | kJ/m² | 83.4 | 71.6 | 86.7 | 75.2 |
| NIS/-20°C | kJ/m² | 1.1 | 1.1 | 1.1 | 3.1 |
| Flexural modulus | MPa | 259 | 375 | 318 | 200 |
| Tensile Modulus | MPa | 287 | 476 | 381 | - |
| Haze (1mm) | % | 18 | 23 | 19 | 19 |
| Clarity (1mm) | % | 100 | 99 | 99 | 99 |
| G' (23 °C) | MPa | 95 | 234 | 167 | |
| Tg1 | °C | -6.0 | -6.0 | -6.0 | -2.2 |
| Tg2 | °C | -20.1 | -22.0 | -22.0 | -28.2 |
| Tc | °C | 90 | 105 | 104 | 102 |
| Tm1 | °C | 127 | 143 | 143 | 139 |
| NIS/Haze | | 4.6 | 3.1 | 4.6 | 3.9 |

**Table 4 Physical characterisation of the Comparative Examples (CE1 to CE6))**

| | | **CE1** | **CE2** | **CE3** | **CE4** | **CE5** | **CE6** |
|---|---|---|---|---|---|---|---|
| MFR | g/10min | 7.8 | 3 | 2.6 | 2.3 | 1.72 | 7 |
| C2 in bulk | wt.-% | 2.7 | 3.2 | 2.2 | 4.0 | 2.4 | 4.3 |
| C2 in G1 | wt.-% | 8.6 | 5.8 | 5.5 | 5.6 | 19.8 | 29 |
| Split in G1 | % | 52 | 54 | 50 | 41 | 43 | 15 |
| SF | wt.-% | 25.5 | 6.2 | 4.7 | 5.1 | 45.8 | 22.0 |
| XCS | wt.-% | 26.1 | 6.3 | 4.9 | 5.3 | 46.6 | 22.3 |
| C2 total | wt.-% | 5.7 | 4.6 | 3.8 | 4.7 | 11 | 11.2 |

| **Soluble Fraction** | | | | | | | |
|---|---|---|---|---|---|---|---|
| C2(SF) | wt.-% | 9.5 | 7.0 | - | - | 20 | 30.0 |
| IV(SF) | dl/g | 1.64 | 1.1 | - | - | 3.32 | 2.8 |

| **Crystalline Fraction** | | | | | | | |
|---|---|---|---|---|---|---|---|
| C2(CF) | wt.-% | 4.9 | 4.9 | 4.2 | 5.0 | 4.0 | 4.5 |
| IV(CF) | dl/g | 1.91 | 2.26 | 2.34 | 2.35 | 1.88 | 2.80 |
| Ratio C2(SF)/C2(CF) | | 1.9 | 1.4 | - | - | 5.0 | 6.7 |
| NIS/23°C | kJ/m² | 8.1 | 4.9 | 4.4 | 5.2 | 76.9 | 9.5 |
| NIS/-20°C | kJ/m² | 1 | 1.0 | 1.50 | 1.1 | 94.1 | 1.7 |
| Flexural modulus | MPa | 572 | 727 | 794 | 706 | 219 | 530 |
| Tensile Modulus | MPa | 705 | 817 | 902 | 777 | n.d. | n.d. |
| Haze (1mm) | % | 26 | 28 | 31 | 28 | 58 | 43 |
| Clarity (1mm) | % | 99 | 99 | 99 | 99 | 96 | 96 |
| G' (23 °C) | MPa | 361 | 364 | 426 | 382 | 113 | 330 |
| Tg1 | °C | -10 | -6.1 | -6 | -6 | 2.4 | -6.4 |
| Tg2 | °C | - | - | - | - | -33.8 | -55 |
| Tc | °C | 98 | 96 | 97 | 91 | 103 | 106 |
| Tm1 | °C | 139 | 131 | 135 | 128 | 139 | 144 |
| NIS/Haze | | 0.31 | 0.18 | 0.14 | 0.19 | 1.33 | 0.22 |

It can be seen from Table 3 above, the Inventive Examples show very good impact strength combined with haze values, while providing very soft materials.

Further, they have a pronounced ratio of Notched Impact Strength to Haze.

## Claims

1. Random heterophasic propylene copolymer comprising
a) 45.0 to 73.0 wt.-% of a crystalline matrix being a propylene random copolymer of ethylene and/or C4-C12 alpha-olefin(s) as further comonomer(s),
said crystalline matrix corresponding to the crystalline fraction (CF) determined according to CRYSTEX QC method, ISO 6427-B and containing 3.0 to 8.0 wt.-% of comonomer and
b) 27.0 to 55.0 wt.-% of an amorphous propylene elastomer comprising ethylene and/or C4-C12 alpha-olefin(s),
said the amorphous propylene elastomer corresponds to the soluble fraction (SF) determined according to CRYSTEX QC method, ISO 6427-B and contains 12.0 to 16.5 wt.-% of comonomer, wherein a) and b) add up to 100 wt.-%, and wherein
i) the random heterophasic propylene copolymer has a total comonomer content of 3.0 to 14.0 wt.-%, preferably 4.5 to 12.0 wt.-% or 6.0 to 11.0 wt.-% and optionally
ii) a Haze₁ determined according to ASTM D1003 at 1 mm plaques of 5.0 to 25.0 %.

2. The random heterophasic propylene copolymer according to claim 1 **characterised by** an MFR230/2.16 according to ISO 1133 of 0.1 to 50.0 g/10min; preferably 0.5 to 35.0 g/10min and/or comprising
46.0 to 70.0 wt.-%, preferably 47.0 - 67.0 wt.-%.of the crystalline matrix (a),optionally containing 3.3 to 6.5 wt.-%; preferably 3.6 to 5.5 wt.-% of comonomer
30.0 to 54.0 wt.-%, preferably 33.0 to 53.0 wt.-% of the amorphous matrix (b), optionally containing 12.5 to 16.0 wt.-% of comonomer.

3. The random heterophasic propylene copolymer according to any of the preceding claims, wherein the crystalline and the amorphous phase are present in a co-continuous morphology (CCM) within the random heterophasic propylene copolymer.

4. The random heterophasic propylene copolymer according to according to any of the preceding claims having a fraction soluble in cold xylene (XCS) in the range of 30.0 - 60.0 wt.-% based on the total weight of the random heterophasic propylene copolymer.

5. The random heterophasic propylene copolymer according to any of the preceding claims, having at least two distinct glass transitions temperatures, Tg1 and Tg2 wherein a first glass transition temperatures lies in the range of (-10.0) to 0 °C and a second glass transition temperature lies in the range of (-30.0) to (-15.0) °C.

6. The random heterophasic propylene copolymer according to any of the preceding claims having
a) a Flexural Modulus according to ISO178 of 150 to 500 MPa, like 170 to 450 MPa or preferably 180 to 400 MPa , and/or
b) a ratio of Notched Impact strength +23 °C to Haze₁ (NIS+23/Haze) of 1.50 to 10.0, preferably 2.0 to 8.0 or preferably 2.8 to 6.0 and/or
c) a Notched Impact Strength determined according to ISO179/1eA at +23 °C of 30.0 - 120 kJ/m², like 45.0 to 100.0 kJ/m² or preferably 60.0 to 90.0 kJ/m² and/or
a Haze₁ determined according to ASTM D1003 at 1 mm plaques of 7.0 to 24.0 %, preferably 9.0 to 23.0 %.

7. The random heterophasic propylene copolymer according to any of the preceding claims, wherein the crystalline fraction and/or the soluble fraction each has an Intrinsic viscosity when determined according to CRYSTEX QC method, ISO 6427-B, of 1.4 to 3.0 dl/g, preferably 1.6 to 2.8 dl/g or 1.7 to 2.6 dl/g.

8. The random heterophasic propylene copolymer according to any of the preceding claims, wherein the ratio of the comonomer contents of the soluble fraction, C2(SF), to the comonomer contents of the crystalline fraction, C2(CF), is in the range of 2.0 to 4.9; preferably in the range of 2.1 to 4.7; more preferably in the range of 2.2 to 4.5.

9. The random heterophasic propylene copolymer according to any of the preceding claims being produced in the presence of a metallocene catalyst.

10. The random heterophasic propylene copolymer according to any of the preceding claims, wherein the crystalline fraction and/or the soluble fraction each independently from the other comprises, preferably consists of propylene and ethylene comonomer units.

11. The random heterophasic propylene copolymer according to any of the preceding claims **characterized by** a Molecular Weight Distribution (MWD), being the ratio of Mw/Mn of in the range of 1.5 to 4.2, preferably 2.0 to 4.1, like 2.5 to 3.9.

12. Process for preparing the random heterophasic propylene copolymer according to any of the preceding claims comprising the steps of
a) polymerizing propylene and optionally comonomer units selected from ethylene or alpha-olefins with 4 to 12 carbon atoms in a first polymerization reactor in the presence of a single-site catalyst to produce a first polymerization mixture comprising a first propylene copolymer, preferably being an propylene random copolymer and a single-site catalyst;
b) transferring the first polymerization mixture into a second polymerization reactor;
c) polymerizing propylene and comonomer units selected from ethylene or alpha-olefins with 4 to 12 carbon atoms in said second polymerization reactor in the presence of said single-site catalyst to produce a second polymerization mixture comprising a second propylene copolymer, said first propylene homo- or copolymer and the single-site catalyst, wherein the weight ratio of said first propylene homo- or copolymer to said second propylene copolymer is in the range of 35:65 to 55:45;
d) withdrawing said second polymerization mixture from said second polymerization reactor; and
e) compounding said second polymerization mixture optionally with the addition of additives to form the random heterophasic propylene copolymer.

13. Process according to claim 12), wherein the first propylene random copolymer has a comonomer content, preferably ethylene content, of 1.0 to 6.0 wt.-%; preferably 1.5 to 5.2 wt.-%; or 2.0 to 4.5 wt.-%.

14. Article, like an extruded- or injection moulded article, comprising the random heterophasic propylene copolymer according to any of the preceding claims.

15. Use of the random heterophasic propylene copolymer according to claims 1 to 11 for producing an article.
